# EUROPEAN PATENT APPLICATION

(11) **EP 4 550 063 A1**
(43) Date of publication of application: **07.05.2025**
(21) Application number: 23207933.5
(22) Date of filing: 06.11.2023
(51) Int. Cl.: G05B 13/02, G05B 19/19

(54) **NEURAL NETWORK FEEDFORWARD FRAMEWORK FOR COMPLIANCE COMPENSATION**

(71) Applicant: ASML Netherlands B.V., 5500 AH Veldhoven (NL); Technische Universiteit Eindhoven, 5612 AE Eindhoven (NL)
(72) Inventor: HEERTJES, Marcel François, 5500 AH Veldhoven (NL); LUBBERS, Menno Leonard Sjoerd, 5500 AH Veldhoven (NL); KON, Jan Johannes, 5612 AZ Eindhoven (NL); ZEGERS, Jeroen Cornelius, 5500 AH Veldhoven (NL)
(74) Representative: ASML Netherlands B.V.

(57) **Abstract**

Neural network feedforward control with projection-based regularization is described. This enables linear parameter-varying snap feedforward control. A physics guided neural network is used in combination with a nominal feedforward control structure. The neural network has meaningful physical input signals and is small to overcome over-parameterization. The parameters of the neural network render machine specific settings. Projection-based regularization is applied such that feedforward contributions explained by a nominal model end up in this model, which are simultaneously optimized, and not in the neural network. A meandering profile is used that renders data that reflects relevant properties of a setpoint, and relevant data needed for identifying the compliant behavior that avoids exiting high frequency resonance behavior. A compliance function is obtained from the neural network rather than a table of compliance values for specific positions, which does not require interpolation or storage of tables.

## Description

### FIELD

The present disclosure relates to a system, a method for controlling a component of the system, and a non-transitory computer readable medium.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") of a patterning device (e.g., a mask) onto a layer of radiation-sensitive material (resist) provided on a substrate (e.g., a wafer).

As semiconductor manufacturing processes continue to advance, the dimensions of circuit elements have continually been reduced, while the amount of functional elements, such as transistors, per device has been steadily increasing over decades, following a trend commonly referred to as 'Moore's law'. To keep up with Moore's law the semiconductor industry is chasing technologies that enable it to create increasingly smaller features. To project a pattern on a substrate a lithographic apparatus may use electromagnetic radiation. The wavelength of this radiation determines the minimum size of features which are patterned on the substrate. Typical wavelengths currently in use are 365 nm (i-line), 248 nm, 193 nm, and 13.5 nm. A lithographic apparatus, which uses extreme ultraviolet (EUV) radiation, having a wavelength within a range of 4 nm to 20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such a process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller ki the more difficult it becomes to reproduce the pattern on the substrate that resembles the shape and dimensions planned by a circuit designer in order to achieve particular electrical functionality and performance.

To overcome these difficulties, sophisticated fine-tuning steps may be applied to the lithographic projection apparatus, a metrology apparatus, and/or design layout. These include, for example, but are not limited to, optimization of NA, customized illumination schemes, use of phase shifting patterning devices, various optimization of the design layout such as optical proximity correction (OPC, sometimes also referred to as "optical and process correction") in the design layout, implementing techniques for precisely controlling movement of structures in the lithographic projection apparatus and/or metrology apparatus, or other methods generally defined as "resolution enhancement techniques" (RET). For example, tight control loops for controlling a stability of the lithographic and/or metrology apparatus may be used to improve reproduction of the pattern at low-k₁.

### SUMMARY

Successful semiconductor processing depends on repeatable motion control of physical structures such as a stage. The motion control should account for dynamic forces, time variance of the system under control, and/or other factors. Dynamic forces may be forces that result from the movement of various components of an apparatus, the types of components used in an apparatus, the location of an apparatus, component wear, and/or other similar factors. In semiconductor manufacturing and/or in other applications, dynamic forces and corresponding motion control are often not perfectly repeatable. This can cause inaccuracies in the movement of a component of a semiconductor manufacturing apparatus, for example, a stage and/or other components.

The systems and methods described herein are configured to more accurately control the motion of apparatus components relative to prior systems. In contrast to prior systems, neural network feedforward control with projection-based regularization is utilized. This enables linear parameter-varying snap feedforward control. A physics guided neural network is used in combination with a nominal feedforward control structure. The neural network has (a) meaningful physical input signals, for example position, (cross-coupled) acceleration, and (cross-coupled) snap, and (b) is small to overcome over-parameterization. The parameters of the neural network render machine-specific settings as these result from data-based optimization. Projection-based regularization is applied such that feedforward contributions explained by the nominal model end up in this model, which are simultaneously optimized, and not in the neural network. A tailored wafer meandering profile is used that renders data that reflects (a) relevant properties of the setpoint in the form of j/a and s/j ratios, and (b) relevant data needed for identifying the (cross coupling) compliant behavior of the stage that avoids exciting high frequency resonance behavior. A (cross coupling) compliance function is obtained from the neural network rather than a table of compliance values for specific xy positions; this requires neither interpolation nor storage of tables.

Considering at least the above, according to an embodiment, there is provided a motion control system. The system comprises a physical structure configured to move; a motor configured to cause the physical structure to move; and one or more processors operatively coupled to the motor. The one or more processors may form and/or be included in a control system and/or framework, and/or other structures. The control system and/or framework may include one or more computing systems (e.g., one or more servers, desktop computers, laptops, etc.) that include the one or more processors. The one or more processors are configured to execute a feedforward control. The feedforward control is configured to determine, based on a first control input, a feedforward signal for the physical structure. The one or more processors are configured to execute a physics guided neural network configured to determine, based on a second control input, a compensation signal for the physical structure. The compensation signal comprises position-dependent compliance and/or structural dynamics information for the physical structure. The physics guided neural network operates simultaneously with, and complimentary to, the feedforward control. The feedforward signal and the compensation signal are configured to be combined to form a control output. The one or more processors are configured to control the motor to move the physical structure based on the control output.

In some embodiments, the system further comprises an input layer configured to receive input position information for the physical structure, and determine the first control input and the second control input based on the input position information. In some embodiments, the input layer is configured such that a first set of predefined properties of the input position information is provided to the feedforward control as the first control input, and a second set of predefined properties of the input position information is provided to the physics guided neural network as the second control input. In some embodiments, the first control input and the second control input comprise digital signals indicating one or more of a position, one or more movement directions, and/or a higher order derivative of the position of the physical structure over time. The higher order derivative of the position comprises a first derivative (velocity), a second derivative (acceleration), a third derivative (jerk), or a fourth derivative (snap).

In some embodiments, the first control input comprises snap control information for one or more movement directions, and/or acceleration information for the one or more movement directions. In some embodiments, the second control input comprises cross-coupled input position information, cross-coupled acceleration information for one or more movement directions, and/or cross-coupled snap control information for the one or more movement directions.

In some embodiments, the one or more processors are configured such that parameters of the physics guided neural network render machine specific settings for the physical structure and the motor since these result from data-based optimization. In some embodiments, the one or more processors are configured to apply projection-based regularization such that feedforward contributions explained by the feedforward control are simultaneously optimized, independent of the physics guided neural network.

In some embodiments, the physics guided neural network comprises one input layer, at least one hidden layer, and one output layer. In some embodiments, the physics guided neural network comprises a number of neurons. The neurons comprise linear gains and/or nonlinear activation functions.

In some embodiments, the physics guided neural network is trained with training data. Training data may compromise low frequency position-dependent input-output data containing compliant effects of the physical structure. Compliance may not be measured directly, but extracted, learned, and/or estimated indirectly from input output data. In some embodiments, the training data is generated by causing the physical structure to move with a tailored meandering profile configured to generate training data that reflects (a) relevant properties of a setpoint in the form of certain target ratios, and (b) relevant data needed for identifying cross-coupling compliance behavior of the physical structure that avoids exciting high frequency resonance behavior. In some embodiments, training the physics guided neural network causes the physics guided neural network to learn to predict position-dependent force(s) on the physical structure during acceleration. In some embodiments, the physics guided neural network is pretrained with the training data. In some embodiments, training is performed offline, online, or offline and online in combination.

In some embodiments, the training data comprises a plurality of benchmark training input-output pairs. Training data may compromise low frequency position-dependent input-output data containing compliant effects of the physical structure, for example. In some embodiments, the training generates one or more coefficients for the physics guided neural network. The one or more coefficients are associated with machine specific settings for a machine that includes the physical structure.

In some embodiments, movement comprises acceleration of the physical structure. In some embodiments, the physical structure comprises a stage in a semiconductor lithography apparatus, an optical metrology inspection tool, or an e-beam inspection tool. In some embodiments, the physical structure comprises a reticle stage, a wafer stage, a mirror, or a lens element, configured to move toward one or more positions for lithography.

In some embodiments, the feedforward control and physics guided neural network are configured by machine readable instructions executed by the one or more processors.

According to another embodiment, there is provided a motion control system comprising a feedforward control. The feedforward control is configured to determine, based on a first control input, a feedforward signal for a physical structure. The system comprises a physics guided neural network configured to determine, based on a second control input, a compensation signal for the physical structure. The compensation signal comprises position-dependent compliance and/or structural dynamics information for the physical structure. The physics guided neural network operates simultaneously with, and complimentary to, the feedforward control. The feedforward signal and the compensation signal are configured to be combined to form a control output. The physical structure is controlled to move based on the control output.

According to another embodiment, there is provided a motion control method comprising one or more of any of the operations described above.

According to another embodiment, there is provided a method for training a motion control system. The motion control system comprises an input layer configured to receive input position information for a physical structure and determine a first control input and a second control input based on the input position information; a feedforward control configured to determine, based on the first control input, a feedforward signal for a physical structure; and a physics guided neural network configured to determine, based on the second control input, a compensation signal for the physical structure. The compensation signal comprises position-dependent compliance and/or structural dynamics information for the physical structure. The physics guided neural network operates simultaneously with, and complimentary to, the feedforward control. The feedforward signal and the compensation signal are configured to be combined to form a control output. The control output is configured to be used to control a motor to move the physical structure. The method for training comprises generating training data comprising low frequency position-dependent input-output data containing compliant effects of the physical structure. The training data is generated by causing the physical structure to move with a tailored meandering profile. The training data is configured to reflect (a) relevant properties of a setpoint in the form of certain target ratios, and (b) relevant data needed for identifying cross coupling compliance behavior of the physical structure that avoids exciting high frequency resonance behavior. The method comprises providing training data to the physics guided neural network. Training the physics guided neural network causes the physics guided neural network to learn to predict position-dependent force(s) on the physical structure during acceleration.

According to another embodiment, there is provided a non-transitory computer readable medium having instructions thereon, the instructions when executed by a computer implementing the process of any of the embodiments described above.

### BRIEF DESCRIPTION OF THE DRAWINGS

Embodiments of the invention will now be described, by way of example only, with reference to the accompanying schematic drawings.
Figure 1 depicts a schematic overview of a lithographic apparatus.
Figure 2 depicts a detailed view of a part of the lithographic apparatus of Figure 1.
Figure 3 schematically depicts a position control system.
Figure 4 schematically depicts a schematic overview of a lithographic cell.
Figure 5 schematically depicts a schematic representation of holistic lithography, representing a cooperation between three key technologies to optimize semiconductor manufacturing.
Figure 6 illustrates a portion of an embodiment of the system described in this application including a feedforward control, a physics guided neural network, and an input layer.
Figure 7 illustrates a tailored meandering profile for a physical structure such as a lithography stage which is configured to generate training data useable to train the physics guided neural network.
Figure 8 illustrates an example motion control method.
Figure 9 is a block diagram of an example computer system.

### DETAILED DESCRIPTION

Rigid body feedforward control of physical structures such as stages and/or other components of lithography and/or metrology apparatuses (as two examples) is often performed with acceleration feedforward. Non-rigid body feedforward control is typically performed either with (a) snap feedforward, i.e., exerting forces proportional to snap on a stage and/or other physical structures to compensate for deformation, or with (b) compliance compensation, i.e., making adjustments in a measurement system (e.g., a setpoint), by electronically removing estimated deformation from sensor measurements. Compliance and the resulting deformation is position-dependent, i.e., it varies across a physical structure as a result of the presence of non-rigid body modes. Compliance compensation offers a position-dependent solution that in the past could not be successfully obtained with snap feedforward control.

Compliance compensation has limitations. For example, during acceleration, an original setpoint is no longer tracked. For current xy stage (as an example of a physical structure) profiles this may not pose a problem as xy scanning takes place under zero acceleration. However, for scanning under acceleration while exposing or for vertical wafer (e.g., an example of a substrate held by a stage) setpoint tracking this compromises its effectiveness. In addition, beyond a controller bandwidth, compliance compensation may induce an increased sensitivity to setpoint content by amplification with 40 dB/decade, for example. As a result, high frequency decay of minus five for a fourth-order setpoint is effectively reduced to minus three, i.e., the decay of a second-order setpoint. This causes more excitation of high frequency (poorly damped) resonances to occur during acceleration. Furthermore, compliance compensation is often based on an estimated (static) deformation obtained from a finite element model (FEM). This does not address machine specifics, and also uses a finite position grid, with interpolation required between grid points. This means that inherently, non-rigid body dynamics are disregarded (e.g., because of the static nature of the FEM).

The present systems and methods utilize advances in machine learning, in particular neural network feedforward control with projection-based regularization, to enable linear parameter-varying snap feedforward control with the following properties: (a) tracking the original setpoint during acceleration as well as during constant velocity intervals; (b) machine-dedicated feedforwards obtained through data-based optimization under operating conditions; and (c) no 40 dB/decade amplification for minus-two-minus-four plants in the interval of minus four.

As described above, the systems and methods described herein are configured to more accurately control the motion of apparatus components relative to prior systems. In contrast to prior systems, neural network feedforward control with projection-based regularization is utilized. This enables linear parameter-varying snap feedforward control. A physics guided neural network is used in combination with a nominal feedforward control structure. The neural network has (a) meaningful physical input signals, for example position, (cross-coupled) acceleration, and (cross-coupled) snap, and (b) is small to overcome over-parameterization and/or other limitations. The parameters of the neural network render machine-specific settings as these result from data based optimization. Projection-based regularization is applied such that feedforward contributions explained by the nominal model end up in this model, which are simultaneously optimized, and not in the neural network. A tailored meandering profile is used that renders data that reflects (a) relevant properties of the setpoint in the form of j/a and s/j ratios, and (b) relevant data needed for identifying the (cross coupling) compliant behavior of the stage that avoids exciting high frequency resonance behavior. A (cross coupling) compliance function is obtained from the neural network rather than a table of compliance values for specific xy positions. This requires neither interpolation nor storage of tables.

By way of a brief introduction, in the present document, motion control using a physics guided neural network is described in the context of integrated circuit and/or semiconductor manufacturing. One of ordinary skill in the art may apply principles of motion control using a machine learning model in other operations where precise control of one or more moving components of an apparatus is desired.

Given the present context, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm). The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

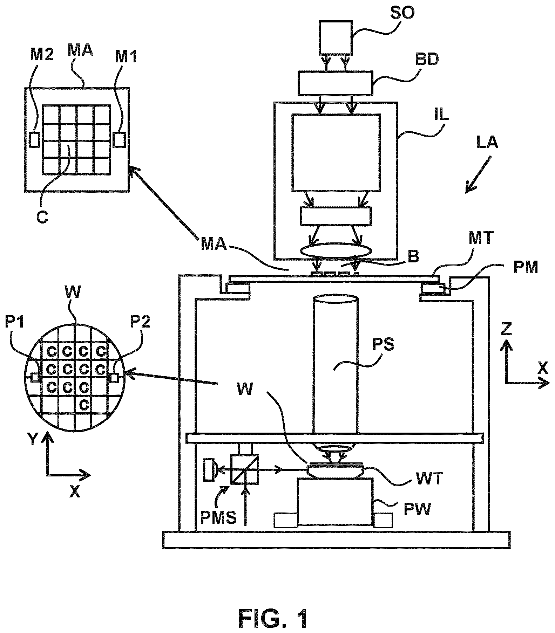

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a physical structure such as a mask support (e.g., a mask table) MT constructed to support a patterning device (e.g., a mask) MA and connected to a first positioner PM configured to accurately position the patterning device MA in accordance with certain parameters, a physical structure such as a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography.

The lithographic apparatus LA may also be of a type having two or more substrate supports WT (e.g., physical structures). In such a "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage (e.g., another possible example of a physical structure). The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the patterning device MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

Note that the lithographic apparatus LA may include various controllable physical structures such as a reticle stage, a wafer stage, a mirror, a lens element, and/or any other components configured to move toward one or more positions for lithography. In addition, similar controllable physical structures may be utilized in an optical metrology inspection tool, an e-beam inspection tool, and or other systems.

To clarify the invention, a Cartesian coordinate system is used. The Cartesian coordinate system has three axes, i.e., an x-axis, a y-axis and a z-axis. Each of the three axis is orthogonal to the other two axes. A rotation around the x-axis is referred to as an Rx-rotation. A rotation around the y-axis is referred to as an Ry-rotation. A rotation around about the z-axis is referred to as an Rz-rotation. The x-axis and the y-axis define a horizontal plane, whereas the z-axis is in a vertical direction. The Cartesian coordinate system is not limiting the invention and is used for clarification only. Instead, another coordinate system, such as a cylindrical coordinate system, may be used to clarify the invention. The orientation of the Cartesian coordinate system may be different, for example, such that the z-axis has a component along the horizontal plane.

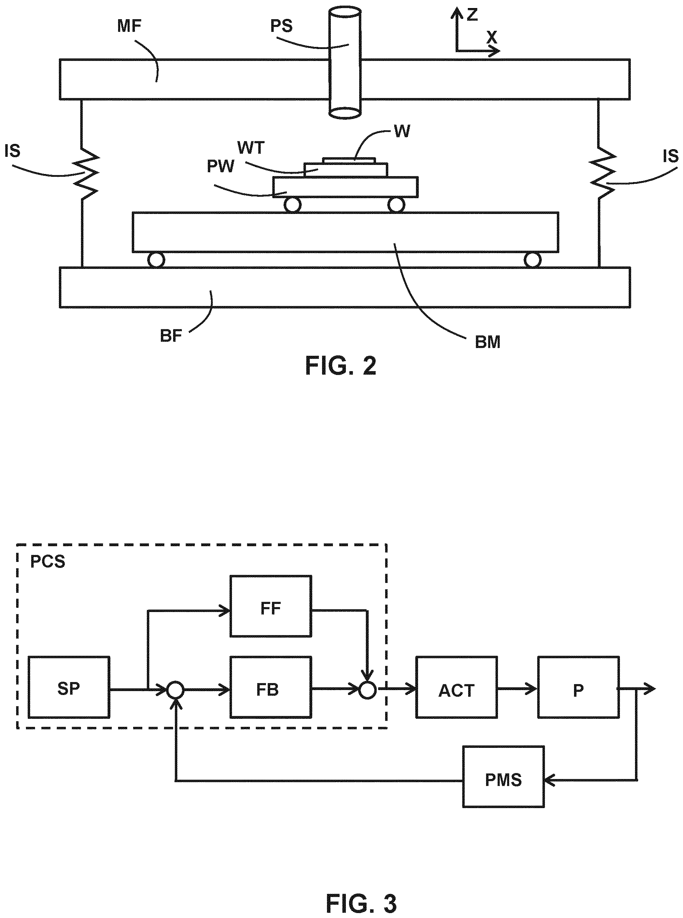

Figure 2 shows a more detailed view of a part of the lithographic apparatus LA of Figure 1. The lithographic apparatus LA may be provided with a base frame BF, a balance mass BM, a metrology frame MF and a vibration isolation system IS. The metrology frame MF supports the projection system PS. Additionally, the metrology frame MF may support a part of the position measurement system PMS. The metrology frame MF is supported by the base frame BF via the vibration isolation system IS. The vibration isolation system IS is arranged to prevent or reduce vibrations from propagating from the base frame BF to the metrology frame MF.

The second positioner PW is arranged to accelerate the substrate support WT by providing a driving force between the substrate support WT and the balance mass BM. The driving force accelerates the substrate support WT in a desired direction. Due to the conservation of momentum, the driving force is also applied to the balance mass BM with equal magnitude, but at a direction opposite to the desired direction. Typically, the mass of the balance mass BM is significantly larger than the masses of the moving part of the second positioner PW and the substrate support WT.

In an embodiment, the second positioner PW is supported by the balance mass BM. For example, the second positioner PW may comprise a planar motor to levitate the substrate support WT above the balance mass BM. In another embodiment, the second positioner PW is supported by the base frame BF. For example, the second positioner PW may comprise a linear motor and a bearing, like a gas bearing, to levitate the substrate support WT above the base frame BF.

The lithographic apparatus LA may comprise a position control system PCS as schematically depicted in Figure 3. The position control system PCS comprises a setpoint generator SP, a feedforward control FF and a feedback control FB. The position control system PCS provides a drive signal to the actuator ACT. The actuator ACT may be the actuator of the first positioner PM or the second positioner PW, and/or other moving components of the lithographic apparatus LA (or of a metrology system, etc., as described above). For example, the actuator ACT may drive the plant P, which may comprise the substrate support WT or the mask support MT. An output of the plant P is a position quantity such as position or velocity or acceleration or another higher order time derivative of the position. The position quantity is measured with the position measurement system PMS. The position measurement system PMS generates a signal, which is a position signal representative of the position quantity of the plant P. The setpoint generator SP generates a signal, which is a reference signal representative of a desired position quantity of the plant P. For example, the reference signal represents a desired trajectory of the substrate support WT. A difference between the reference signal and the position signal forms an input for the feedback controller FB. Based on the input, the feedback controller FB provides at least part of the drive signal for the actuator ACT. The reference signal may form an input for the feedforward control FF. Based on the input, the feedforward control FF provides at least part of the drive signal for the actuator ACT. The feedforward FF may make use of information about dynamical characteristics of the plant P, such as mass, stiffness, resonance modes and eigenfrequencies. Additional details of the system shown in Figure 3 are described below.

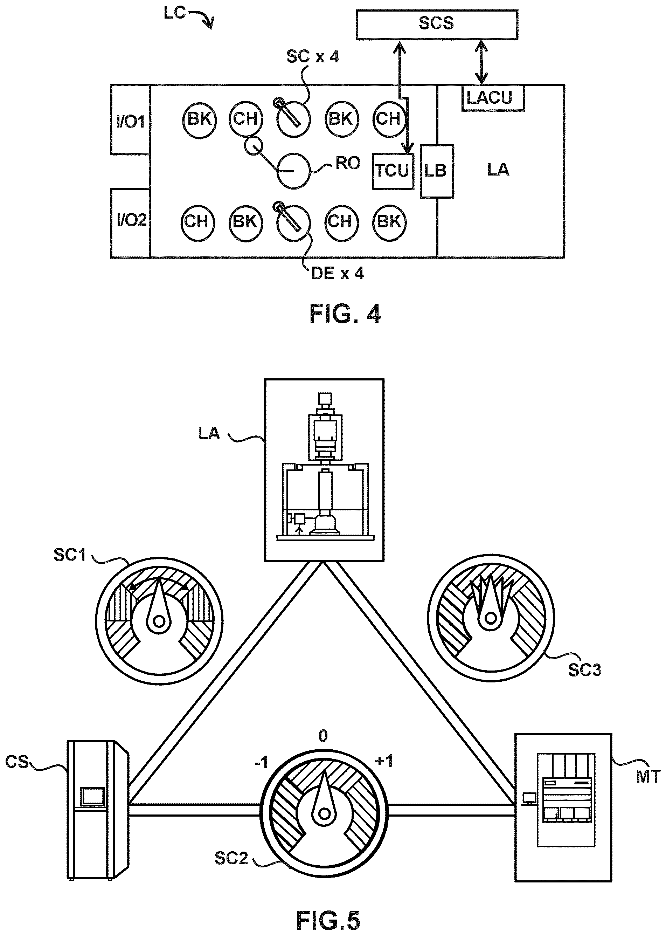

As shown in Figure 4 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus (or system), is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 5. One of these systems is the lithographic apparatus LA which is (virtually) connected to a metrology tool MT (a second system) and to a computer (or computing) system CS (a third system). The key of such a "holistic" environment is to optimize the cooperation between these three systems to enhance the overall process window and to provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CS may use (part of) the design layout to be patterned to predict which resolution enhancement techniques to use and to perform computational lithography simulations and calculations to determine which mask layout and lithographic apparatus settings achieve the largest overall process window of the patterning process (depicted in Figure 5 by the double arrow in the first scale SC1). Typically, the resolution enhancement techniques are arranged to match the patterning possibilities of the lithographic apparatus LA. The computer system CS may also be used to detect where within the process window the lithographic apparatus LA is currently operating (e.g. using input from the metrology tool MT) to predict whether defects may be present due to e.g. sub-optimal processing (depicted in Figure 5 by the arrow pointing "0" in the second scale SC2).

The metrology tool MT may provide input to the computer system CS to enable accurate simulations and predictions, and may provide feedback to the lithographic apparatus LA to identify possible drifts, e.g. in a calibration status of the lithographic apparatus LA (depicted in Figure 3 by the multiple arrows in the third scale SC3).

As mentioned above by reference to the Figs. 1-5, the lithographic apparatus, the metrology tool and/or lithocell typically include a plurality of physical structures such as stage systems used to position a specimen, substrate, mask or sensor arrangement relative to a reference or another component. Examples include the mask support MT and first positioner PM, the substrate support WT and the second positioner PW, the measurement stage arranged to hold a sensor and/or a cleaning device, and the stage used in the inspection tool MT where a substrate W is positioned relative to e.g. a scanning electron microscope or some kind of scatterometer. These apparatuses may include several other moving components such as a reticle stage, a wafer stage, mirrors, lens elements, light sources (e.g., a drive laser, an EUV source, etc.), a reticle masking stage, a wafer top cooler, wafer and reticle handlers, vibration isolation systems, stage torque compensators, software and/or hardware modules that control and/or include such components, and/or other components. These example physical structures may be configured to move toward, into, and/or out of one or more positions for lithography. These examples are not intended to be limiting.

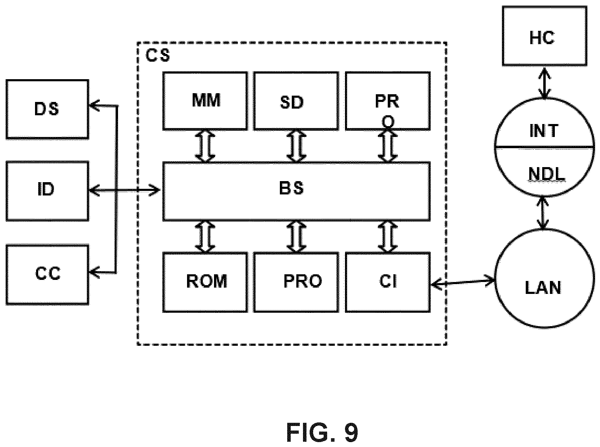

As described above, the present system (e.g., including one or more processors PRO -see Figure 9 described below - of a position control system such as PCS (Figure 3), which may be and/or include CS, shown in Figure 3 and described above, and in Figure 9 described below) is configured to control movement of a physical structure (e.g., such as one or more of the components described above). In some embodiments, movement comprises acceleration of the physical structure and/or other movement.

In the context of the examples described above, the system (PCS) provides a drive signal to the actuator ACT (e.g., which may be and/or include a motor and/or other similar components). The actuator ACT may be the actuator of the first positioner PM or the second positioner PW (e.g., a physical structure such as a table), and/or other moving components of the lithographic apparatus LA (or of a metrology system, etc., as described above). For example, the motor or actuator ACT may drive the substrate support WT or the mask support MT.

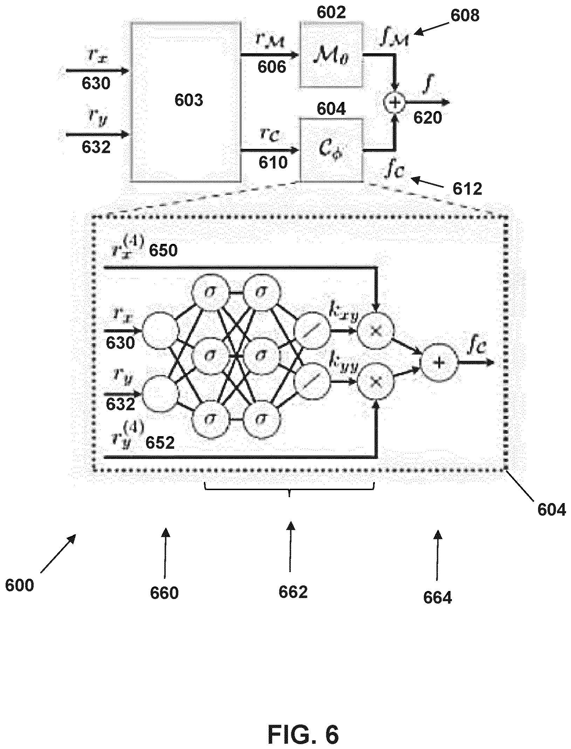

Figure 6 illustrates a portion of an embodiment 600 of the present system including a feedforward control 602 (*M*_{θ}) , a physics guided neural network 604 (C_{ϕ}) , and an input layer 603. Feedforward control 602, physics guided neural network 604, and input layer 603 are configured by machine readable instructions executed by one or more processors (e.g., see PRO in Figure 9). The one or more processors are operatively coupled to the motor (which may be included in and/or form actuator ACT shown in Figure 3). Feedforward control 602 is configured to determine, based on a first control input 606 (r*_{M}*), a feedforward signal 608 (f*_{M}*) for the physical structure. The one or more processors are also configured to execute physics guided neural network 604, which is configured to determine, based on a second control input 610 (r*_{c}*), a compensation signal 612 (f*_{c}*) for the physical structure. Compensation signal 612 comprises position-dependent compliance and/or structural dynamics information for the physical structure, and/or other information. As shown in Figure 6, physics guided neural network 604 operates simultaneously with, and complimentary to, feedforward control 602. Feedforward signal 608 and compensation signal 612 are configured to be combined (see "+" symbol in Figure 6) to form a control output 620 (*f*). The one or more processors are configured to control the motor and/or other actuator (e.g., see ACT in Figure 3) to move the physical structure (see examples in Figure 1-5) based on control output 620 and/or other information. In some embodiments, feedforward signal 608 represents a typical feedforward signal, and compensation signal 612 compliments feedforward 608 such that control output 620 can be used to accurately position a physical structure such as a stage, for example.

In some embodiments, the parameters of physics guided neural network 604 render machine specific settings for the physical structure and the motor (and/or other actuator) since these result from data-based optimization. In addition, projection-based regularization may be applied such that feedforward contributions explained by feedforward control 602 are simultaneously optimized, independent of physics guided neural network 604. This may allow physics guided neural network 604 to have a more compact structure (e.g., less layers, less neurons) and/or have other advantages.

Input layer 603 may be thought of as a physics guided input layer. For example, input layer 603 is configured to receive input position information 630 and 632 for the physical structure, and determine the first control input 606 and the second control input 610 based on the input position information 630 and 632. In this example, input position information 630 comprises a reference position trajectory for the physical structure (e.g., a stage) to follow in an x dimension (e.g., rₓ). Input position information 632 comprises a reference position trajectory for the physical structure to follow in a y dimension (e.g., r_{y}). These may be considered setpoints, for example. Input layer 603 is configured such that a first set of predefined properties of the input position information is provided to feedforward control 602 as the first control input 606, and a second set of predefined properties of the input position information is provided to the physics guided neural network 604 as the second control input 610. These first and second sets of predefined properties of the input position information may be sets of signals comprising n th-order (e.g. first, second, or higher) time derivatives of the input position information signals 630 and/or 632. In some embodiments, either set might include the last nonzero sign of the velocity. In some embodiments, either set might include oscillations with predefined frequency and damping characteristics. In some embodiments, either set might include past values of either feedforward signal *f*_{M} or compensation signal *f*_{C}, or combinations thereof. The choice for the predefined properties selected in the input layer can be based on insight on the physical properties of the system to be controlled, (hence the phrase physics guided input layer, and/or physics guided neural network is used).

The first control input 606 and the second control input 610 may comprise digital signals indicating one or more of a position, one or more movement directions, a higher order derivative of the position of the physical structure over time, and/or other information. The higher order derivative of the position may comprise a first derivative (velocity), a second derivative (acceleration), a third derivative (jerk), or a fourth derivative (snap), for example. Figure 6 illustrates fourth order derivatives (snap) 650 and 652 of rₓ and r_{y}, respectively. These may be snap control information or snap signals, for example. In some embodiments, first control input 606 comprises snap control information for one or more movement directions (e.g., rₓ and r_{y} in this example), acceleration information for the one or more movement directions, and/or other information. Second control input 610 may comprise cross-coupled input position information, cross-coupled acceleration information for one or more movement directions, cross-coupled snap control information for the one or more movement directions, and/or other information. In this way, physics guided neural network 604 may be trained or otherwise configured to reflect base physical knowledge related to the acceleration and/or other movement of a physical structure and compensate for snap effects.

In some embodiments, physics guided neural network 604 comprises one input layer 660, at least one hidden layer 662 (in this example there are multiple hidden layers 662), and one output layer 664. Physics guided neural network 604 comprises a number of neurons (e.g., the individual circles). The neurons may comprise linear gains (see circles with a slash "/" inside), nonlinear activation functions (see circles with a sigma "σ" inside), and/or other functionality. Figure 6 also illustrates direct and cross snap gains (e.g., k_{xy} and k_{yy}), which are multiplied by (see circles with multiplication symbols "x") fourth order derivatives (snap) 650 and 652 of rₓ and r_{y}, respectively. Note that Figure 6 illustrates just one possible example arrangement of these neurons.

Physics guided neural network 604 may be trained with training data. Training data may compromise low frequency position-dependent input-output data containing compliant effects of the physical structure, and/or other data. Compliance may not be measured directly, but extracted, learned, and/or estimated indirectly from input output data. The training data may be generated by causing the physical structure to move with a tailored meandering profile configured to generate training data that reflects (a) relevant properties of a setpoint in the form of certain target ratios, and (b) relevant data needed for identifying cross coupling compliance behavior of the physical structure that avoids exciting high frequency resonance behavior. In this way, a (cross coupling) compliance function may be obtained from physics guided neural network 604, rather than a table of compliance values for specific xy positions. This does not require interpolation or storage of tables, among other advantages. In Figure 6, k_{xy} and k_{yy} are signal names. The compliance function is embedded in the total structure of the sigmoids and `/'-operator. In Figure 6, k_{xy} and k_{yy} indirectly relate to the compliance function: one can reconstruct the compliance function from these signals if 1) these signals are evaluated for a specific input, and 2) these signals are postprocessed.

However, note that machine specific compliance compensation tables can potentially be obtained from multi-sine stage identification experiments; with the latter focusing on steady-state performance (as a result of the Fourier transform) rather than capturing transients which are often essential for scan-in effects. As another option, one may expand the feedforward control with the cross compliance instead, which may make the use of a neural network obsolete. A straightforward approach would then be to introduce tables with the table entries the parameters to be optimized. One drawback of such an approach is over-parameterization, and poor conditioning of the optimization problem, which may induce non-optimal tracking performance.

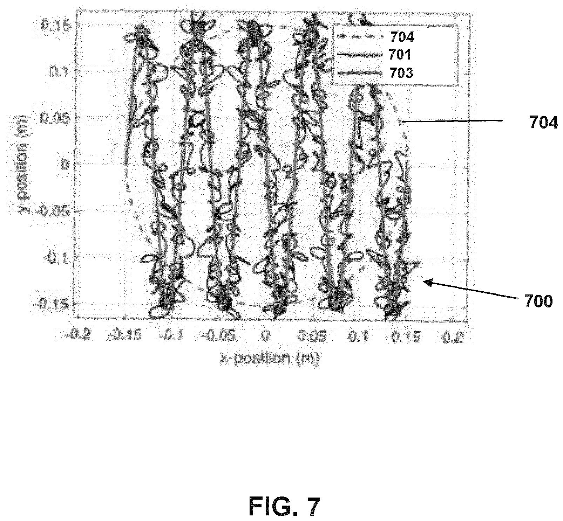

Figure 7 illustrates a tailored meandering profile 700 (comprising a trajectory 701 and an exploration profile 703) for a physical structure (e.g., a lithography apparatus stage) carrying a semiconductor wafer 704 to follow, which is configured to generate training data. Note that the physical structure is hidden from view underneath wafer 704 in Figure 7. Tailored wafer meandering profile 700 renders data that reflects (a) relevant properties of a setpoint (e.g., rₓ, r_{y}) in the form of j/a and s/j ratios, and (b) relevant data needed for identifying the (cross coupling) compliant behavior of a physical structure such as a stage that avoids exiting high frequency resonance behavior. The j/a and s/j ratios are the ratio between setpoint jerk and setpoint acceleration, and the ratio between setpoint snap and setpoint jerk, respectively. The design of these ratios determines the typical frequency content of the setpoint.

Apart from the tailored wafer meander profile described above, existing meandering profiles may provide reasonable alternatives - for example a series of typical measuring scans that are conducted in parallel to lithography exposure. The use of these existing profiles may save calibration time. However, this method appears to excite too many high frequency resonances, which deteriorate optimization results.

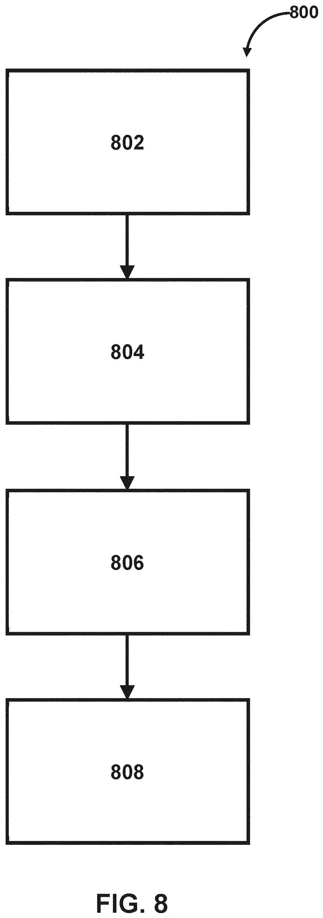

Training physics guided neural network 604 (Figure 6) causes physics guided neural network 604 to learn to predict position-dependent force(s) on the physical structure during acceleration. In some embodiments, physics guided neural network 604 is pretrained with the training data. Training may be performed offline, online, or offline and online in combination. In some embodiments, the training data comprises low frequency position-dependent input-output data containing compliant effects of the physical structure (e.g., as described above), and/or other information. Training generates one or more coefficients for physics guided neural network 604. The one or more coefficients are associated with machine specific settings for a machine that includes the physical structure (e.g., lithography apparatus LA shown and described above). Additional information regarding training is discussed below as part of method 800 shown in Figure 8.

Figure 8 illustrates an example method 800 for controlling a moving physical structure of an apparatus. Method 800 may be associated with a moving component of a lithography apparatus, optical and/or e-beam inspection tools, and/or other systems. As described above, the physical structure may be and/or include a reticle stage, a wafer stage, mirrors, lens elements, light sources (e.g., a drive laser, an EUV source, etc.), a reticle masking stage, a wafer top cooler, wafer and reticle handlers, vibration isolation systems, stage torque compensators, software and/or hardware modules that include such components, and/or other components.

Method 800 comprises training 802 a physics guided neural network; executing 804 a feedforward control; executing 806 the physics guided neural network; and controlling 808 the physical structure of the apparatus based on a control output comprising a combination of a feedforward signal and a compensation signal; and/or other operations. In some embodiments, method 800 is performed for (or as part of) a semiconductor manufacturing process, for example. In some embodiments, the component is configured to be moved toward, into, and/or out of one or more positions for lithography, inspection, etc.

The operations of method 800 presented below are intended to be illustrative. In some embodiments, method 800 may be accomplished with one or more additional operations not described, and/or without one or more of the operations discussed. For example, method 800 may not require training the physics guided neural network (e.g., the physics guided neural network may be pretrained). Additionally, the order in which the operations of method 800 are illustrated in Figure 8 and described below is not intended to be limiting.

In some embodiments, one or more portions of method 800 may be implemented (e.g., by simulation, modeling, etc.) in one or more processing devices (e.g., one or more processors). The one or more processing devices may include one or more devices executing some or all of the operations of method 800 in response to instructions stored electronically on an electronic storage medium. The one or more processing devices may include one or more devices configured through hardware, firmware, and/or software to be specifically designed for execution of one or more of the operations of method 800, for example.

As described above, method 800 comprises training 802 a physics guided neural network. In some embodiments, the physics guided neural network may be and/or include one or more neural networks, and/or other tools and machine learning model components. For example, the physics guided neural network may be and/or include one or more artificial neural networks having an input layer, an output layer, and one or more intermediate or hidden layers. In some embodiments, the one or more artificial neural networks may be and/or include deep neural networks (e.g., neural networks that have one or more intermediate or hidden layers between the input and output layers), neural networks containing a recurrence - including but not limited to recurrent neural networks, neural ordinary differential equations, or long short term memory networks, and/or other neural networks.

The one or more neural networks may be trained using training data. Training data may compromise low frequency position-dependent input-output data containing compliant effects of the physical structure. For example, the training data may comprise a plurality of benchmark training control inputs and a corresponding feedforward signal to track the control position. The training data may include a set of training samples. Each sample may be a pair comprising an input object (often formatted as a vector, which may be called a feature vector) and a desired output value (also called the supervisory signal). A training algorithm analyzes the training data and adjusts the behavior of the artificial neural network by adjusting the parameters (e.g., weights, biases, etc., of one or more layers and/or other parameters) of the artificial neural network based on the training data. For example, given a set of N training samples of the form {(x₁,y₁), (x₂,y₂), ... , (x_{N},y_{N})} such that xᵢ is the feature vector of the i-th example and yᵢ is its supervisory signal, a training algorithm seeks a neural network g: X → Y, where X is the input space and Y is the output space. A feature vector is an n-dimensional vector of numerical features that represent some object (e.g., a control input such as a motion setpoint, a control output such as a feedforward signal, etc.). The vector space associated with these vectors is often called the feature or latent space. After training, the neural network may be used for making predictions using new samples (e.g., different motion setpoints and/or other control inputs).

A trained physics guided neural network is configured to determine, based on a control input, a compensation signal comprising position-dependent compliance and/or structural dynamics information for the physical structure. The neural network is trained with the training data such that the neural network determines the compensation signal regardless of whether or not the control input falls outside the training data. This means that the neural network can interpolate between know inputs, and/or extrapolate beyond the known outputs, for example.

In some embodiments, the training is off-line, online, or off-line and online in combination. Offline training may comprise a procedure that takes place separately from the physical structure and/or the apparatus. This means that machine (apparatus) production (e.g., semiconductor manufacturing) does not need to be interrupted while training the neural network. Online training comprises training with a given machine (apparatus). This would require production to be interrupted as the machine (apparatus) is required to perform training motions.

The training may generate one or more coefficients for the neural network. The one or more coefficients may include layer and/or individual neuron weights and/or biases, for example, and/or other coefficients. These coefficients may change over time responsive to the neural network being retrained, manual adjustment by a user, and/or other operations.

It should be noted, that even though training the neural network is described in the context of a single moving physical structure of an apparatus, the neural network is also trained to account for more than one moving component in one or more apparatuses, and/or interactive effects between one or more such components.

In some embodiments, training 802 comprises generating training data. The training data comprises low frequency position-dependent compliance data measured for the physical structure. The training data is generated by causing the physical structure to move with a tailored meandering profile and/or other movements. The training data is configured to reflect (a) relevant properties of a setpoint in the form of certain target ratios, and (b) relevant data needed for identifying cross coupling compliance behavior of the physical structure that avoids exciting high frequency resonance behavior. Operation 802 comprises providing training data to the physics guided neural network. Training the physics guided neural network causes the physics guided neural network to learn to predict position-dependent force(s) on the physical structure during acceleration. The training generates one or more coefficients for the physics guided neural network. The one or more coefficients is associated with machine (e.g., a lithograph apparatus such as LA described above, a metrology apparatus, etc.) specific settings for a machine that includes the physical structure (e.g., a stage, a mirror, a lens, etc.).

Method 800 comprises executing 804 a feedforward control; and executing 806 the physics guided neural network. The feedforward control is configured to determine, based on a first control input, a feedforward signal for a physical structure. The physics guided neural network is configured to determine, based on a second control input, a compensation signal for the physical structure. The compensation signal comprises position-dependent compliance and/or structural dynamics information for the physical structure.

The physics guided neural network operates simultaneously with, and complimentary to, the feedforward control. The feedforward signal and the compensation signal are configured to be combined to form a control output; and the control output is configured to be used to control a motor to move the physical structure (see controlling 808 operations described below).

In some embodiments, method 800 comprises executing an input layer configured to receive input position information for the physical structure, and determine the first control input and the second control input based on the input position information. The input layer is configured such that a first set of predefined properties of the input position information is provided to the feedforward control as the first control input, and a second set of predefined properties of the input position information is provided to the physics guided neural network as the second control input. The first control input and the second control input comprise digital signals indicating one or more of a position, one or more movement directions, a higher order derivative of the position of the physical structure over time, and/or other information. The higher order derivative of the position comprises a first derivative (velocity), a second derivative (acceleration), a third derivative (jerk), or a fourth derivative (snap).

In some embodiments, movement comprises acceleration of the physical structure. The first control input may comprise snap control information for one or more movement directions, and/or acceleration information for the one or more movement directions, for example. The second control input may comprise cross-coupled input position information, cross-coupled acceleration information for one or more movement directions, cross-coupled snap control information for the one or more movement directions, and/or other information.

Parameters of the physics guided neural network render machine specific settings for the physical structure and the motor since these result from data-based optimization. In some embodiments, method 800 comprises applying projection-based regularization such that feedforward contributions explained by the feedforward control are simultaneously optimized, independent of the physics guided neural network.

Method 800 comprises controlling 808 the physical structure of the apparatus based at least on the control output. Controlling 808 the moving component may include generating a control signal and/or other electronic signals. Controlling 808 the physical structure may include transmitting the control signal and/or other electronic signals to the physical structure (and/or one or more actuators such as a motor controlling the physical structure) and/or overall apparatus that includes the component.

Figure 9 is a block diagram of an example computer system CS, according to an embodiment. Computer system CS may assist in implementing the methods, flows, or the system(s) disclosed herein. Computer system CS may form at least a portion of such a system (e.g., position control system PCS described above). Computer system CS includes a bus BS or other communication mechanism for communicating information, and a processor PRO (or multiple processors) coupled with bus BS for processing information. Computer system CS also includes a main memory MM, such as a random access memory (RAM) or other dynamic storage device, coupled to bus BS for storing information and instructions to be executed by processor PRO. Main memory MM also may be used for storing temporary variables or other intermediate information during execution of instructions to be executed by processor PRO, for example. Computer system CS includes a read only memory (ROM) ROM or other static storage device coupled to bus BS for storing static information and instructions for processor PRO. A storage device SD, such as a magnetic disk or optical disk, is provided and coupled to bus BS for storing information and instructions.

Computer system CS may be coupled via bus BS to a display DS, such as a cathode ray tube (CRT) or flat panel or touch panel display for displaying information to a computer user. An input device ID, including alphanumeric and other keys, is coupled to bus BS for communicating information and command selections to processor PRO. Another type of user input device is cursor control CC, such as a mouse, a trackball, or cursor direction keys for communicating direction information and command selections to processor PRO and for controlling cursor movement on display DS. This input device typically has two degrees of freedom in two axes, a first axis (e.g., x) and a second axis (e.g., y), that allows the device to specify positions in a plane. A touch panel (screen) display may also be used as an input device.

In some embodiments, portions of one or more methods described herein may be performed by computer system CS in response to one or more processors PRO executing one or more sequences of one or more instructions contained in main memory MM. Such instructions may be read into main memory MM from another computer-readable medium, such as storage device SD. Execution of the sequences of instructions contained in main memory MM causes processor PRO to perform the process steps described herein. One or more processors in a multi-processing arrangement may also be employed to execute the sequences of instructions contained in main memory MM. In some embodiments, hard-wired circuitry may be used in place of or in combination with software instructions. Thus, the description herein is not limited to any specific combination of hardware circuitry and software.

The term "computer-readable medium" as used herein refers to any medium that participates in providing instructions to a processor PRO for execution. Such a medium may take many forms, including but not limited to, non-volatile media, volatile media, and transmission media. Non-volatile media include, for example, optical or magnetic disks, such as storage device SD. Volatile media include dynamic memory, such as main memory MM. Transmission media include coaxial cables, copper wire and fiber optics, including the wires that comprise bus BS. Transmission media can also take the form of acoustic or light waves, such as those generated during radio frequency (RF) and infrared (IR) data communications. Computer-readable media can be non-transitory, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge. Non-transitory computer readable media can have instructions recorded thereon. The instructions, when executed by a computer, can implement any of the features described herein. Transitory computer-readable media can include a carrier wave or other propagating electromagnetic signal.

Various forms of computer readable media may be involved in carrying one or more sequences of one or more instructions to processor PRO for execution. For example, the instructions may initially be borne on a magnetic disk of a remote computer. The remote computer can load the instructions into its dynamic memory and send the instructions over a telephone line using a modem. A modem local to computer system CS can receive the data on the telephone line and use an infrared transmitter to convert the data to an infrared signal. An infrared detector coupled to bus BS can receive the data carried in the infrared signal and place the data on bus BS. Bus BS carries the data to main memory MM, from which processor PRO retrieves and executes the instructions. The instructions received by main memory MM may optionally be stored on storage device SD either before or after execution by processor PRO.

Computer system CS may also include a communication interface CI coupled to bus BS. Communication interface CI provides a two-way data communication coupling to a network link NDL that is connected to a local network LAN. For example, communication interface CI may be an integrated services digital network (ISDN) card or a modem to provide a data communication connection to a corresponding type of telephone line. As another example, communication interface CI may be a local area network (LAN) card to provide a data communication connection to a compatible LAN. Wireless links may also be implemented. In any such implementation, communication interface CI sends and receives electrical, electromagnetic or optical signals that carry digital data streams representing various types of information.

Network link NDL typically provides data communication through one or more networks to other data devices. For example, network link NDL may provide a connection through local network LAN to a host computer HC. This can include data communication services provided through the worldwide packet data communication network, now commonly referred to as the "Internet" INT. Local network LAN (Internet) both use electrical, electromagnetic or optical signals that carry digital data streams. The signals through the various networks and the signals on network data link NDL and through communication interface CI, which carry the digital data to and from computer system CS, are exemplary forms of carrier waves transporting the information.

Computer system CS can send messages and receive data, including program code, through the network(s), network data link NDL, and communication interface CI. In the Internet example, host computer HC might transmit a requested code for an application program through Internet INT, network data link NDL, local network LAN and communication interface CI. One such downloaded application may provide all or part of a method described herein, for example. The received code may be executed by processor PRO as it is received, and/or stored in storage device SD, or other non-volatile storage for later execution. In this manner, computer system CS may obtain application code in the form of a carrier wave.

Various embodiments of the present systems and methods are disclosed in the subsequent list of numbered clauses. In the following, further features, characteristics, and exemplary technical solutions of the present disclosure will be described in terms of clauses that may be optionally claimed in any combination:
1. A motion control system, comprising: a physical structure configured to move; a motor configured to cause the physical structure to move; and one or more processors operatively coupled to the motor, the one or more processors configured to: execute a feedforward control, the feedforward control configured to determine, based on a first control input, a feedforward signal for the physical structure; and execute a physics guided neural network configured to determine, based on a second control input, a compensation signal for the physical structure, the compensation signal comprising position-dependent compliance and/or structural dynamics information for the physical structure, wherein: the physics guided neural network operates simultaneously with, and complimentary to, the feedforward control, the feedforward signal and the compensation signal are configured to be combined to form a control output; and the one or more processors are configured to control the motor to move the physical structure based on the control output.
2. The system of clause 1, further comprising an input layer configured to receive input position information for the physical structure, and determine the first control input and the second control input based on the input position information.
3. The system of any of the previous clauses, wherein the input layer is configured such that a first set of predefined properties of the input position information is provided to the feedforward control as the first control input, and a second set of predefined properties of the input position information is provided to the physics guided neural network as the second control input.
4. The system of any of the previous clauses, wherein the first control input and the second control input comprise digital signals indicating one or more of a position, one or more movement directions, and/or a higher order derivative of the position of the physical structure over time.
5. The system of any of the previous clauses, wherein the higher order derivative of the position comprises a first derivative (velocity), a second derivative (acceleration), a third derivative (jerk), or a fourth derivative (snap).
6. The system of any of the previous clauses, wherein the first control input comprises snap control information for one or more movement directions, and/or acceleration information for the one or more movement directions.
7. The system of any of the previous clauses, wherein the second control input comprises one or more of cross-coupled input position information, cross-coupled acceleration information for one or more movement directions, or cross-coupled snap control information for the one or more movement directions.
8. The system of any of the previous clauses, wherein the second control input comprises cross-coupled input position information, cross-coupled acceleration information for one or more movement directions, and cross-coupled snap control information for the one or more movement directions.
9. The system of any of the previous clauses, wherein the one or more processors are configured to apply projection-based regularization such that feedforward contributions explained by the feedforward control are simultaneously optimized, independent of the physics guided neural network.
10. The system of any of the previous clauses, wherein the physics guided neural network comprises one input layer, at least one hidden layer, and one output layer.
11. The system of any of the previous clauses, wherein the physics guided neural network comprises a number of neurons, the neurons comprising linear gains and/or nonlinear activation functions.
12. The system of any of the previous clauses, wherein the physics guided neural network is trained with training data comprising low frequency position-dependent input-output data containing compliant effects of the physical structure.
13. The system of any of the previous clauses, wherein the training data is generated by causing the physical structure to move with a tailored meandering profile configured to generate training data that reflects (a) relevant properties of a setpoint in the form of certain target ratios, and (b) relevant data needed for identifying cross coupling compliance behavior of the physical structure that avoids exciting high frequency resonance behavior.
14. The system of any of the previous clauses, wherein training the physics guided neural network causes the physics guided neural network to learn to predict position-dependent force(s) on the physical structure during acceleration.
15. The system of any of the previous clauses, wherein the physics guided neural network is pretrained with the training data.
16. The system of any of the previous clauses, wherein training is performed offline, online, or offline and online in combination.
17. The system of any of the previous clauses, wherein the training data comprises a plurality of benchmark training control position input and corresponding compliance output pairs.
18. The system of any of the previous clauses, wherein the training generates one or more coefficients for the physics guided neural network, the one or more coefficients associated with machine specific settings for a machine that includes the physical structure.
19. The system of any of the previous clauses, wherein movement comprises acceleration of the physical structure.
20. The system of any of the previous clauses, wherein the physical structure comprises a stage in a semiconductor lithography apparatus, an optical metrology inspection tool, or an e-beam inspection tool.
21. The system of any of the previous clauses, wherein the physical structure comprises a reticle stage, a wafer stage, a mirror, or a lens element, configured to move toward one or more positions for lithography.
22. The system of any of the previous clauses, wherein the feedforward control and physics guided neural network are configured by machine readable instructions executed by the one or more processors.
23. A motion control system, comprising: a feedforward control, the feedforward control configured to determine, based on a first control input, a feedforward signal for a physical structure; and a physics guided neural network configured to determine, based on a second control input, a compensation signal for the physical structure, the compensation signal comprising position-dependent compliance and/or structural dynamics information for the physical structure, wherein: the physics guided neural network operates simultaneously with, and complimentary to, the feedforward control, the feedforward signal and the compensation signal are configured to be combined to form a control output; and the physical structure is controlled to move based on the control output.
24. The system of clause 23, further comprising a physics guided input layer configured to receive input position information for the physical structure, and determine the first control input and the second control input based on the input position information.
25. The system of any of the previous clauses, wherein the input layer is configured such that a first set of predefined properties of the input position information is provided to the feedforward control as the first control input, and a second set of predefined properties of the input position information is provided to the physics guided neural network as the second control input.
26. The system of any of the previous clauses, wherein the first control input and the second control input comprise digital signals indicating one or more of a position, one or more movement directions, and/or a higher order derivative of the position of the physical structure over time.
27. The system of any of the previous clauses, wherein the higher order derivative of the position comprises a first derivative (velocity), a second derivative (acceleration), a third derivative (jerk), or a fourth derivative (snap).
28. The system of any of the previous clauses, wherein the first control input comprises snap control information for one or more movement directions, and/or acceleration information for the one or more movement directions.
29. The system of any of the previous clauses, wherein the second control input comprises one or more of cross-coupled input position information, cross-coupled acceleration information for one or more movement directions, or cross-coupled snap control information for the one or more movement directions.
30. The system of any of the previous clauses, wherein the second control input comprises cross-coupled input position information, cross-coupled acceleration information for one or more movement directions, and cross-coupled snap control information for the one or more movement directions.
31. The system of any of the previous clauses, wherein projection-based regularization is applied such that feedforward contributions explained by the feedforward control are simultaneously optimized, independent of the physics guided neural network.
32. The system of any of the previous clauses, wherein the physics guided neural network comprises one input layer, at least one hidden layer, and one output layer.
33. The system of any of the previous clauses, wherein the physics guided neural network comprises a number of neurons, the neurons comprising linear gains and/or nonlinear activation functions.
34. The system of any of the previous clauses, wherein the physics guided neural network is trained with training data comprising low frequency position-dependent input-output data containing compliant effects of the physical structure.
35. The system of any of the previous clauses, wherein the training data is generated by causing the physical structure to move with a tailored meandering profile configured to generate training data that reflects (a) relevant properties of a setpoint in the form of certain target ratios, and (b) relevant data needed for identifying cross coupling compliance behavior of the physical structure that avoids exciting high frequency resonance behavior.
36. The system of any of the previous clauses, wherein training the physics guided neural network causes the physics guided neural network to learn to predict position-dependent force(s) on the physical structure during acceleration.
37. The system of any of the previous clauses, wherein the physics guided neural network is pretrained with the training data.
38. The system of any of the previous clauses, wherein training is performed offline, online, or offline and online in combination.
39. The system of any of the previous clauses, wherein the training data comprises a plurality of benchmark training control position input and corresponding compliance output pairs.
40. The system of any of the previous clauses, wherein the training generates one or more coefficients for the physics guided neural network, the one or more coefficients associated with machine specific settings for a machine that includes the physical structure.
41. The system of any of the previous clauses, wherein movement comprises acceleration of the physical structure.
42. The system of any of the previous clauses, wherein the physical structure comprises a stage in a semiconductor lithography apparatus, an optical metrology inspection tool, or an e-beam inspection tool.
43. The system of any of the previous clauses, wherein the physical structure comprises a reticle stage, a wafer stage, a mirror, or a lens element, configured to move toward one or more positions for lithography.
44. The system of any of the previous clauses, wherein the feedforward control and physics guided neural network are configured by machine readable instructions executed by one or more processors.
45. A motion control method, comprising: executing, with one or more processors, a feedforward control, the feedforward control configured to determine, based on a first control input, a feedforward signal for a physical structure; and executing, with the one or more processors, a physics guided neural network configured to determine, based on a second control input, a compensation signal for the physical structure, the compensation signal comprising position-dependent compliance and/or structural dynamics information for the physical structure, wherein: the physics guided neural network operates simultaneously with, and complimentary to, the feedforward control, the feedforward signal and the compensation signal are configured to be combined to form a control output; and the control output is configured to be used, by the one or more processors, to control a motor to move the physical structure.
46. The method of clause 45, further comprising executing, with the one or more processors, an input layer configured to receive input position information for the physical structure, and determine the first control input and the second control input based on the input position information.
47. The method of any of the previous clauses, wherein the input layer is configured such that a first set of predefined properties of the input position information is provided to the feedforward control as the first control input, and a second set of predefined properties of the input position information is provided to the physics guided neural network as the second control input.
48. The method of any of the previous clauses, wherein the first control input and the second control input comprise digital signals indicating one or more of a position, one or more movement directions, and/or a higher order derivative of the position of the physical structure over time.
49. The method of any of the previous clauses, wherein the higher order derivative of the position comprises a first derivative (velocity), a second derivative (acceleration), a third derivative (jerk), or a fourth derivative (snap).
50. The method of any of the previous clauses, wherein the first control input comprises snap control information for one or more movement directions, and/or acceleration information for the one or more movement directions.
51. The method of any of the previous clauses, wherein the second control input comprises one or more of cross-coupled input position information, cross-coupled acceleration information for one or more movement directions, or cross-coupled snap control information for the one or more movement directions.
52. The method of any of the previous clauses, wherein the second control input comprises cross-coupled input position information, cross-coupled acceleration information for one or more movement directions, and cross-coupled snap control information for the one or more movement directions.
53. The method of any of the previous clauses, further comprising applying, with the one or more processors, projection-based regularization such that feedforward contributions explained by the feedforward control are simultaneously optimized, independent of the physics guided neural network.
54. The method of any of the previous clauses, wherein the physics guided neural network comprises one input layer, at least one hidden layer, and one output layer.
55. The method of any of the previous clauses, wherein the physics guided neural network comprises a number of neurons, the neurons comprising linear gains and/or nonlinear activation functions.
56. The method of any of the previous clauses, wherein the physics guided neural network is trained with training data comprising low frequency position-dependent input-output data containing compliant effects of the physical structure.
57. The method of any of the previous clauses, wherein the training data is generated by causing the physical structure to move with a tailored meandering profile configured to generate training data that reflects (a) relevant properties of a setpoint in the form of certain target ratios, and (b) relevant data needed for identifying cross coupling compliance behavior of the physical structure that avoids exciting high frequency resonance behavior.
58. The method of any of the previous clauses, wherein training the physics guided neural network causes the physics guided neural network to learn to predict position-dependent force(s) on the physical structure during acceleration.
59. The method of any of the previous clauses, wherein the physics guided neural network is pretrained with the training data.
60. The method of any of the previous clauses, wherein training is performed offline, online, or offline and online in combination.
61. The method of any of the previous clauses, wherein the training data comprises a plurality of benchmark training control position input and corresponding compliance output pairs.
62. The method of any of the previous clauses, wherein the training generates one or more coefficients for the physics guided neural network, the one or more coefficients associated with machine specific settings for a machine that includes the physical structure.
63. The method of any of the previous clauses, wherein movement comprises acceleration of the physical structure.
64. The method of any of the previous clauses, wherein the physical structure comprises a stage in a semiconductor lithography apparatus, an optical metrology inspection tool, or an e-beam inspection tool.
65. The method of any of the previous clauses, wherein the physical structure comprises a reticle stage, a wafer stage, a mirror, or a lens element, configured to move toward one or more positions for lithography.
66. The method of any of the previous clauses, wherein the feedforward control and physics guided neural network are configured by machine readable instructions executed by the one or more processors.
67. A non-transitory computer readable medium having instructions thereon, the instructions when executed by a computer causing the computer to perform a motion control method, the method comprising: executing a feedforward control, the feedforward control configured to determine, based on a first control input, a feedforward signal for a physical structure; and executing a physics guided neural network configured to determine, based on a second control input, a compensation signal for the physical structure, the compensation signal comprising position-dependent compliance and/or structural dynamics information for the physical structure, wherein: the physics guided neural network operates simultaneously with, and complimentary to, the feedforward control, the feedforward signal and the compensation signal are configured to be combined to form a control output; and the control output is configured to be used to control a motor to move the physical structure.
68. The medium of clause 67, the method further comprising executing an input layer configured to receive input position information for the physical structure, and determine the first control input and the second control input based on the input position information.
69. The medium of any of the previous clauses, wherein the input layer is configured such that a first set of predefined properties of the input position information is provided to the feedforward control as the first control input, and a second set of predefined properties of the input position information is provided to the physics guided neural network as the second control input.
70. The medium of any of the previous clauses, wherein the first control input and the second control input comprise digital signals indicating one or more of a position, one or more movement directions, and/or a higher order derivative of the position of the physical structure over time.
71. The medium of any of the previous clauses, wherein the higher order derivative of the position comprises a first derivative (velocity), a second derivative (acceleration), a third derivative (jerk), or a fourth derivative (snap).
72. The medium of any of the previous clauses, wherein the first control input comprises snap control information for one or more movement directions, and/or acceleration information for the one or more movement directions.
73. The medium of any of the previous clauses, wherein the second control input comprises one or more of cross-coupled input position information, cross-coupled acceleration information for one or more movement directions, or cross-coupled snap control information for the one or more movement directions.
74. The medium of any of the previous clauses, wherein the second control input comprises cross-coupled input position information, cross-coupled acceleration information for one or more movement directions, and cross-coupled snap control information for the one or more movement directions.
75. The medium of any of the previous clauses, the method further comprising applying projection-based regularization such that feedforward contributions explained by the feedforward control are simultaneously optimized, independent of the physics guided neural network.
76. The medium of any of the previous clauses, wherein the physics guided neural network comprises one input layer, at least one hidden layer, and one output layer.
77. The medium of any of the previous clauses, wherein the physics guided neural network comprises a number of neurons, the neurons comprising linear gains and/or nonlinear activation functions.
78. The medium of any of the previous clauses, wherein the physics guided neural network is trained with training data comprising low frequency position-dependent input-output data containing compliant effects of the physical structure.
79. The medium of any of the previous clauses, wherein the training data is generated by causing the physical structure to move with a tailored meandering profile configured to generate training data that reflects (a) relevant properties of a setpoint in the form of certain target ratios, and (b) relevant data needed for identifying cross coupling compliance behavior of the physical structure that avoids exciting high frequency resonance behavior.
80. The medium of any of the previous clauses, wherein training the physics guided neural network causes the physics guided neural network to learn to predict position-dependent force(s) on the physical structure during acceleration.
81. The medium of any of the previous clauses, wherein the physics guided neural network is pretrained with the training data.
82. The medium of any of the previous clauses, wherein training is performed offline, online, or offline and online in combination.
83. The medium of any of the previous clauses, wherein the training data comprises a plurality of benchmark training control position input and corresponding compliance output pairs.
84. The medium of any of the previous clauses, wherein the training generates one or more coefficients for the physics guided neural network, the one or more coefficients associated with machine specific settings for a machine that includes the physical structure.
85. The medium of any of the previous clauses, wherein movement comprises acceleration of the physical structure.
86. The medium of any of the previous clauses, wherein the physical structure comprises a stage in a semiconductor lithography apparatus, an optical metrology inspection tool, or an e-beam inspection tool.
87. The medium of any of the previous clauses, wherein the physical structure comprises a reticle stage, a wafer stage, a mirror, or a lens element, configured to move toward one or more positions for lithography.
88. The medium of any of the previous clauses, wherein the feedforward control and physics guided neural network are configured by machine readable instructions executed by one or more processors.
89. A method for training a motion control system, the motion control system comprising an input layer configured to receive input position information for a physical structure and determine a first control input and a second control input based on the input position information; a feedforward control configured to determine, based on the first control input, a feedforward signal for a physical structure; and a physics guided neural network configured to determine, based on the second control input, a compensation signal for the physical structure, the compensation signal comprising position-dependent compliance and/or structural dynamics information for the physical structure; wherein: the physics guided neural network operates simultaneously with, and complimentary to, the feedforward control, the feedforward signal and the compensation signal are configured to be combined to form a control output; and the control output is configured to be used to control a motor to move the physical structure, the method for training comprising: generating training data comprising low frequency position-dependent input-output data containing compliant effects of the physical structure, the training data generated by causing the physical structure to move with a tailored meandering profile, the training data configured to reflect (a) relevant properties of a setpoint in the form of certain target ratios, and (b) relevant data needed for identifying cross coupling compliance behavior of the physical structure that avoids exciting high frequency resonance behavior; and providing training data to the physics guided neural network, wherein training the physics guided neural network causes the physics guided neural network to learn to predict position-dependent force(s) on the physical structure during acceleration.
90. The method of clause 89, wherein training is performed offline, online, or offline and online in combination.
91. The method of any of the previous clauses, wherein the training data comprises a plurality of benchmark training control position input and corresponding compliance output pairs.
92. The method of any of the previous clauses, wherein the training generates one or more coefficients for the physics guided neural network, the one or more coefficients associated with machine specific settings for a machine that includes the physical structure.
93. The method of any of the previous clauses, wherein the input layer is configured such that a first set of predefined properties of the input position information is provided to the feedforward control as the first control input, and a second set of predefined properties of the input position information is provided to the physics guided neural network as the second control input.
94. The method of any of the previous clauses, wherein the first control input and the second control input comprise digital signals indicating one or more of a position, one or more movement directions, and/or a higher order derivative of the position of the physical structure over time.
95. The method of any of the previous clauses, wherein the higher order derivative of the position comprises a first derivative (velocity), a second derivative (acceleration), a third derivative (jerk), or a fourth derivative (snap).
96. The method of any of the previous clauses, wherein the first control input comprises snap control information for one or more movement directions, and/or acceleration information for the one or more movement directions.
97. The method of any of the previous clauses, wherein the second control input comprises cross-coupled input position information, cross-coupled acceleration information for one or more movement directions, and/or cross-coupled snap control information for the one or more movement directions.
98. The method of any of the previous clauses, further comprising applying projection-based regularization such that feedforward contributions explained by the feedforward control are simultaneously optimized, independent of the physics guided neural network.
99. The method of any of the previous clauses, wherein the physics guided neural network comprises one input layer, at least one hidden layer, and one output layer, and wherein the physics guided neural network comprises a number of neurons, the neurons comprising linear gains and/or nonlinear activation functions.
100. The method of any of the previous clauses, wherein the physical structure comprises a stage in a semiconductor lithography apparatus, an optical metrology inspection tool, or an e-beam inspection tool; or wherein the physical structure comprises a reticle stage, a wafer stage, a mirror, or a lens element, configured to move toward one or more positions for lithography.

Although specific reference may be made in this text to the use of a lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Where the context allows, embodiments of the invention may be implemented in hardware, firmware, software, or any combination thereof. Embodiments of the invention may also be implemented as instructions stored on a machine-readable medium, which may be read and executed by one or more processors. As described herein, a machine-readable medium may include any mechanism for storing or transmitting information in a form readable by a machine (e.g., a computing device). For example, a machine-readable medium may include read only memory (ROM); random access memory (RAM); magnetic storage media; optical storage media; flash memory devices; electrical, optical, acoustical or other forms of propagated signals (e.g. carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc. and in doing that may cause actuators or other devices to interact with the physical world.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A motion control system, comprising:
a feedforward control, the feedforward control configured to determine, based on a first control input, a feedforward signal for a physical structure; and
a physics guided neural network configured to determine, based on a second control input, a compensation signal for the physical structure, the compensation signal comprising position-dependent compliance and/or structural dynamics information for the physical structure,
wherein:
the physics guided neural network operates simultaneously with, and complimentary to, the feedforward control,
the feedforward signal and the compensation signal are configured to be combined to form a control output; and
the physical structure is controlled to move based on the control output.

2. The system of claim 1, further comprising a physics guided input layer configured to receive input position information for the physical structure, and determine the first control input and the second control input based on the input position information.

3. The system of claim 2, wherein the input layer is configured such that a first set of predefined properties of the input position information is provided to the feedforward control as the first control input, and a second set of predefined properties of the input position information is provided to the physics guided neural network as the second control input.

4. The system of claim 2 or 3, wherein the first control input and the second control input comprise digital signals indicating one or more of a position, one or more movement directions, and/or a higher order derivative of the position of the physical structure over time.

5. The system of any of claims 1 to 4, wherein projection-based regularization is applied such that feedforward contributions explained by the feedforward control are simultaneously optimized, independent of the physics guided neural network.

6. The system of any of claims 1 to 5, wherein the physics guided neural network comprises one input layer, at least one hidden layer, and one output layer.

7. The system of any of claims 1 to 6, wherein the physics guided neural network is trained with training data comprising low frequency position-dependent input-output data containing compliant effects of the physical structure.

8. The system of claim 7, wherein the training data is generated by causing the physical structure to move with a tailored meandering profile configured to generate training data that reflects (a) relevant properties of a setpoint in the form of certain target ratios, and (b) relevant data needed for identifying cross coupling compliance behavior of the physical structure that avoids exciting high frequency resonance behavior.

9. The system of claim 7 or 8, wherein training the physics guided neural network causes the physics guided neural network to learn to predict position-dependent force(s) on the physical structure during acceleration.

10. The system of any of claims 7 to 9, wherein training is performed offline, online, or offline and online in combination.

11. The system of any of claims 7 to 10, wherein the training data comprises a plurality of benchmark training control position input and corresponding compliance output pairs.

12. The system of any of claims 7 to 11, wherein the training generates one or more coefficients for the physics guided neural network, the one or more coefficients associated with machine specific settings for a machine that includes the physical structure.

13. The system of any of claims 1 to 12, wherein the physical structure comprises a stage in a semiconductor lithography apparatus, an optical metrology inspection tool, or an e-beam inspection tool.

14. The system of any of claims 1 to 13, wherein the physical structure comprises a reticle stage, a wafer stage, a mirror, or a lens element, configured to move toward one or more positions for lithography.

15. The system of any of claims 1 to 14, wherein the feedforward control and physics guided neural network are configured by machine readable instructions executed by one or more processors.
